# EUROPÄISCHE PATENTSCHRIFT

(11) **EP 3 861 625 B1**
(45) Veröffentlichungstag und Bekanntmachung des Hinweises auf die Patenterteilung: **06.03.2024**
(21) Anmeldenummer: 19828619.7
(22) Anmeldetag: 12.12.2019
(51) Int. Cl.: H02K 7/10, B60K 6/383

(54) **ELEKTROMOTOR**
ELECTRIC MOTOR
MOTEUR ÉLECTRIQUE

(30) Priorität: 14.12.2018 DE 102018221829
(43) Veröffentlichungstag der Anmeldung: 11.08.2021
(73) Patentinhaber: Brose Fahrzeugteile SE & Co. Kommanditgesellschaft, Würzburg, 97076 Würzburg (DE)
(72) Erfinder: REIHER, Steffen, 97618 Strahlungen (DE); MANGER, Steffen, 97332 Volkach (DE); GOEKE, Christof, 97076 Würzburg (DE); NELSON, Benjamin, 97337 Dettelbach (DE)
(74) Vertreter: FDST Patentanwälte
(86) Internationale Anmeldenummer: PCT/EP2019/084856
(87) Internationale Veröffentlichungsnummer: WO 2020/120661

(56) Entgegenhaltungen:
- WO-A1-2013/007247
- DE-A1- 3 321 172
- DE-C2- 3 321 172
- JP-B2- 4 352 269
- RU-C1- 2 249 733

## Beschreibung

Die Erfindung betrifft einen Elektromotor eines Pumpenantriebs eines Kraftfahrzeugs. Der Elektromotor weist einen Rotor mit einer um eine Rotationsachse gelagerten Motorwelle auf. Die Erfindung betrifft ferner einen Pumpenantrieb eines Kraftfahrzeugs. Der Pumpenantrieb ist zweckmäßigerweise jeweils ein Bestandteil einer Ölpumpe.

Kraftfahrzeuge weisen üblicherweise einen Verbrennungsmotor oder sonstige Aggregate, wie ein Getriebe, auf, bei denen eine vergleichsweise schnelle Bewegung einzelner Bauteile zueinander erfolgt. Zur Minimierung von dabei auftretenden mechanischen Verlusten ist es bekannt, ein Schmiermittel zu verwenden. Als Schmiermittel wird hierbei beispielsweise ein Öl herangezogen. Aufgrund eines dennoch auftretenden Abriebs der einzelnen Bauteile ist es erforderlich, dass das Öl umgewälzt wird, und mittels eines Filters etwaige Fremdpartikel abgeschieden werden. Zudem erfolgt aufgrund des Umwälzens ein Abführen von Wärme, sodass der Verbrennungsmotor bzw. dass das sonstige Aggregat gekühlt wird. Das Öl selbst wird hierbei meist durch einen Ölkühler geführt, mittels dessen die Wärme in die Umgebung des Kraftfahrzeugs abgeführt wird.

Zum Umwälzen des Öls wird üblicherweise eine Ölpumpe mit einem Pumpenantrieb und einem Pumpenkopf herangezogen. Meist ist der Pumpenkopf direkt mittels des Verbrennungsmotors angetrieben, der somit den Pumpenantrieb zumindest teilweise darstellt. Bei einer erhöhten Drehzahl des Verbrennungsmotors wird somit eine vergrößerte Ölmenge gefördert. Sofern das Kraftfahrzeug jedoch mit einer Abschaltautomatik (Start/Stopp-Automatik) ausgerüstet ist, wird der Verbrennungsmotor auch bei vergleichsweise kurzem Stillstand des Kraftfahrzeugs, wie bei einem Halten einer Ampel, stillgesetzt. Somit wird die Ölpumpe nicht betrieben, und ein Ölfilm, der sich auf den einzelnen Bauteilen des Verbrennungsmotors bzw. des sonstigen Aggregats gebildet hat, kann abreißen. Folglich sind bei einer darauffolgenden weiteren Fortbewegung des Kraftfahrzeugs eine Reibung und auch ein Verschleiß erhöht.

Eine alternative Ausgestaltung hierzu ist eine vollständig elektromotorische Ölpumpe. Hierbei wird die Ölpumpe unabhängig von einer Drehzahl des Verbrennungsmotors mittels eines Elektromotors angetrieben, sodass das Öl jeweils bedarfsgerecht gefördert wird. Auch ist somit eine zusätzliche Förderung bei Stillstand des Kraftfahrzeugs möglich. Hierbei wird jedoch während des Betriebs des Kraftfahrzeugs der Elektromotor durchgehend betrieben. Infolgedessen ist es erforderlich, dass die einzelnen Komponenten des Elektromotors eine vergleichsweise große Betriebsdauer aufweisen. Zudem ist eine maximale sowie durchschnittliche, abgerufene Leistung des Elektromotors vergleichsweise groß, weswegen auch deswegen vergleichsweise robuste Komponenten für den Elektromotor herangezogen werden müssen. Zu dem erfolgt aufgrund des dauernden Betriebs des Elektromotors eine vergleichsweise starke Erwärmung, sodass auch eine vergleichsweise hohe Temperaturbeständigkeit der einzelnen Komponenten des Elektromotors erforderlich ist. Dies alles führt zu erhöhten Herstellungskosten des Elektromotors sowie zu einem erhöhten Gewicht.

Bei einer weiteren alternativen Ausgestaltung ist die Ölpumpe mittels des Verbrennungsmotors angetrieben, und es ist eine zusätzliche sekundäre Ölpumpe vorhanden. Mittels dieser ist ein paralleler Kühlkreislauf gebildet, der bei einem Stillstand des Verbrennungsmotors aktiviert wird. Aufgrund der Parallelschaltung der beiden Kreisläufe sind Ventile erforderlich, die in Abhängigkeit des Betriebszustandes des Verbrennungsmotors betätigt werden, sodass ein Ausbilden von parasitären Strömungen unterbunden ist. Auch ist ein vergleichsweise komplexes Verlegen von Leitungen erforderlich. Somit sind Herstellungskosten sowie ein Gewicht erhöht und eine Montage erschwert.

Aus der WO 2013/007247 A1 ist eine Ölpumpe bekannt, die lediglich einen einzigen Pumpenkopf aufweist. Dieser wird mittels eines Verbrennungsmotors angetrieben. Über einen Freilauf wirkt ein Elektromotor auf den Pumpenkopf, sodass bei einem Stillstand des Verbrennungsmotors der Pumpenkopf mittels des Elektromotors angetrieben werden kann.

Aus RU 2 249 733 C1 ist eine freilaufende Kupplung und aus JP 4 352269 B2 ein Hybridantrieb bekannt.

Der Erfindung liegt die Aufgabe zugrunde, einen besonders geeigneten Elektromotor eines Pumpenantriebs eines Kraftfahrzeugs und einen besonders geeignete Pumpenantrieb anzugeben, wobei insbesondere eine Zuverlässigkeit erhöht ist, und wobei zweckmäßigerweise eine Montage vereinfacht ist.

Hinsichtlich des Elektromotors wird diese Aufgabe durch die Merkmale des Anspruchs 1 und hinsichtlich des Pumpenantriebs durch die Merkmale des Anspruchs 8 erfindungsgemäß gelöst. Vorteilhafte Weiterbildungen und Ausgestaltungen sind Gegenstand der jeweiligen Unteransprüche.

Der Elektromotor ist ein Bestandteil eines Pumpenantriebs. Der Pumpenantrieb ist geeignet, geeigneterweise vorgesehen und eingerichtet, einen Pumpenkopf einer Pumpe anzutreiben. Der Pumpenkopf ist zweckmäßigerweise auf das jeweils zu pumpende Fluid, insbesondere die zu pumpende Flüssigkeit, angepasst. Im Montagezustand ist zweckmäßigerweise der Pumpenantrieb an dem etwaigen Pumpenkopf befestigt. Die Pumpe ist beispielsweise eine Wasserpumpe. Alternativ hierzu ist die Pumpe beispielsweise ein Hydraulikpumpe. Besonders bevorzugt jedoch ist die Pumpe eine Schmiermittelpumpe, zweckmäßigerweise eine Ölpumpe. Hierbei wird als Öl beispielsweise ein Getriebeöl herangezogen. Besonders bevorzugt jedoch dient die Ölpumpe dem Pumpen eines Öls eines Verbrennungsmotors. Somit dient der Pumpenantrieb zum Beispiel dem Umwälzen von Öl in einem Verbrennungsmotor. Der Pumpenantrieb ist hierfür geeignet, insbesondere vorgesehen und eingerichtet.

Der Pumpenantrieb selbst ist ein Bestandteil eines Kraftfahrzeugs, wie eines landgebundenen Kraftfahrzeugs. Im bestimmungsgemäßen Gebrauch wird somit das landgebundene Kraftfahrzeug an Land bewegt. Hierbei ist das Kraftfahrzeug zweckmäßigerweise unabhängig von einer Fahrspur, wird jedoch besonders bevorzugt entlang einer Fahrspur bewegt, die beispielsweise aus Asphalt/Teer gefertigt ist. Das landgebundene Kraftfahrzeug umfasst zweckmäßigerweise eine Anzahl an Rädern, die auf einem Boden aufstehen, und mittels derer der Kontakt zu dem Land realisiert ist. Vorzugsweise ist das landgebundene Kraftfahrzeug ein Personenkraftfahrzeug (Pkw) oder ein Nutzkraftfahrzeug, wie ein Lastkraftwagen oder ein Bus. Vorzugsweise wird zumindest eines der Räder, beispielsweise zwei oder sämtliche der Räder, mittels des etwaigen Verbrennungsmotors zumindest teilweise angetrieben, beispielsweise über ein dazwischen angeordnetes Getriebe.

Der Elektromotor weist einen Rotor mit einer Motorwelle auf. Der Rotor, und somit auch die Motorwelle, sind drehbar um eine Rotationsachse gelagert. Zweckmäßigerweise erstreckt sich die Motorwelle entlang der Rotationsachse und ist vorzugsweise konzentrisch bezüglich dieser. Insbesondere ist die Motorwelle zylindrisch ausgestaltet, beispielsweise als Hohlzylinder oder als Vollzylinder. Die Zylinderachse fällt zweckmäßigerweise mit der Rotationsachse zusammen. Die Motorwelle ist zweckmäßigerweise aus einem Metall erstellt, wie einem Stahl, beispielsweise einem Edelstahl. Zudem weist der Elektromotor einen Motorträger auf, mit dem die Motorwelle gekoppelt ist. Hierbei ist die Motorwelle, zweckmäßigerweise der vollständige Rotor, bezüglich des Motorträgers um die Rotationsachse drehbar gelagert.

Die Motorwelle ist mittels eines Freilaufs mit dem Motorträger gekoppelt. Zweckmäßigerweise nimmt der Motorträger zumindest teilweise den Freilauf auf. Insbesondere ist der Freilauf an der Motorwelle und dem Motorträger angebunden. Geeigneterweise erfolgt mittels des Freilaufs zumindest teilweise die Lagerung der des Rotors bezüglich des Motorträgers. Mit anderen Worten dient der Freilauf zumindest teilweise als Lager und/oder ist als Lager ausgestaltet. Folglich wirkt der Motorträger zumindest teilweise als Lagerschild. Zweckmäßigerweise ist der Motorträger auf einer Antriebsseite des Elektromotors angeordnet und fungierte somit als A-seitiges Lagerschild. In einer weiteren Alternative hierzu ist zusätzlich noch ein Lager vorhanden.

Mittels des Freilaufs wird die Drehrichtung der Motorwelle bezüglich des Motorträgers eingeschränkt. Insbesondere ist aufgrund des Freilaufs lediglich eine Rotationsbewegung des Rotors, und somit auch der Motorwelle, in lediglich eine einzige Richtung möglich. Zusammenfassend erfolgt insbesondere mittels des Freilaufs eine Lagerung der Motorwelle bezüglich des Motorträgers, wofür der Freilauf sowohl an dem Motorträger als auch an der Motorwelle angebunden ist. Zweckmäßigerweise ist der Freilauf zumindest teilweise an der Motorwelle oder zumindest einem Abschnitt der Motorwelle befestigt. Mittels des Freilaufs wird dabei sichergestellt, dass eine Rotationsbewegung der Motorwelle bezüglich des Motorträgers lediglich in eine einzige Richtung erfolgen kann. Somit wird beispielsweise bei einer äußeren Krafteinwirkung auf die Motorwelle diese aufgrund des Freilaufs blockiert, zumindest wenn die Kraft entgegen der erlaubten Rotationsrichtung gerichtet ist.

Der Freilauf ist mittels einer Sicherungseinrichtung an dem Motorträger gehalten. Aufgrund der Sicherungseinrichtung wird eine Bewegung des Freilaufs bezüglich des Motorträgers zumindest teilweise verhindert. Mit anderen Worten wird der Freilauf aufgrund der Sicherungseinrichtung bezüglich des Motorträgers stabilisiert. Insbesondere wird mittels der Sicherungseinrichtung hierbei eine Bewegung des Freilaufs in einer axialen Richtung (Axialrichtung) und/oder in einer tangentialen Richtung (Tangentialrichtung) unterbunden. Insbesondere ist die axiale/tangentiale Richtung in Bezug auf die Rotationsachse definiert, und die axiale Richtung ist vorzugsweise parallel zur Rotationsachse. Geeigneterweise erfolgt eine Unterbindung jeweils zumindest in zumindest in eine, beispielsweise jeweils entgegengesetzte Richtungen. Mit anderen Worten ist somit eine vollständige axiale bzw. tangentiale Bewegung verhindert. Besonders bevorzugt erfolgt ein Unterbinden einer Bewegung des Freilaufs bezüglich des Motorträgers sowohl in axialer als auch in tangentialer Richtung.

Zusammenfassend ist insbesondere der Freilauf mittels der Sicherungseinrichtung drehfest an den Motorträger gehalten. Aufgrund der Sicherungseinrichtung ist sichergestellt, dass auch nach einer vergleichsweise großen Betriebsdauer oder bei vergleichsweise ungünstigen Bedingungen der Freilauf bezüglich des Motorträger gesichert ist, sodass stets ein Rückdrehen der Motorwelle, also eine Bewegung entgegen der mittels des Freilaufs vorgegebenen Rotationsrichtung, unterbunden ist. Somit ist eine Zuverlässigkeit erhöht. Auch ist aufgrund der zusätzlichen Sicherungseinrichtung eine vergleichsweise umständliche Montage des Freilaufs an dem Motorträger nicht erforderlich, wie dies beispielsweise bei einer Realisierung eines Presssitzes der Fall ist, bei dem die einzelnen Teile, also insbesondere der Freilauf und der Motorträger, auf unterschiedliche Temperaturen gebracht und in diesem Zustand montiert werden. Ferner ist aufgrund der Sicherungseinrichtung auch eine Zuverlässigkeit bei vergleichsweise großen Temperaturschwankungen des Motorträger und des Freilaufs gegeben.

Zweckmäßigerweise erfolgt mittels der Sicherungseinrichtung eine drehfeste Anbindung, beispielsweise Befestigung, des Freilaufs an dem Motorträger. Somit ist ein Verschleiß des Motorträger und/oder des Freilaufs verhindert. Auch ist stets sichergestellt, dass der Rotor lediglich in die bestimmte Richtung rotiert werden kann. Insbesondere weist der Motorträger eine Aussparung auf, in die der Freilauf eingesetzt ist. Beispielsweise ist hierbei der Freilauf in die Aussparung eingepresst, sodass ein Presssitzes zwischen dem Freilauf und dem Motorträger realisiert ist. Somit ist eine Zuverlässigkeit weiter erhöht. Aufgrund der Sicherungseinrichtung ist der Presssitz/Pressfit jedoch nicht zwingend erforderlich.

Der Motorträger ist beispielsweise aus einem Metall erstellt, zum Beispiel in einem Gussverfahren. Besonders bevorzugt ist der Motorträger aus einem Aluminium, beispielsweise reinem Aluminium oder einer Aluminium gefertigt. Somit ist ein Gewicht des Elektromotors verringert. Geeigneterweise ist der Motorträger mittels eines Aluminiumdruckgusses erstellt. Alternativ oder besonders bevorzugt in Kombination hierzu ist der Freilauf teilweise aus einem Stahl gefertigt. Somit ist eine Robustheit erhöht und ein Verschleiß verringert. Aufgrund der Sicherungseinrichtung ist auch bei einer Erwärmung des Elektromotors sichergestellt, dass das zu übertragende Drehmoment und oder die wirkenden Axialkraft stets aufgenommen werden.

Vorzugsweise umfasst der Motorträger einen oder mehrere Abschnitte, mittels dessen/derer eine Befestigung des Elektromotors an weiteren Bestandteilen ermöglicht ist. Mit anderen Worten dient der Motorträger vorzugsweise auch der Befestigung des Elektromotors an weiteren Bestandteilen des Pumpenantriebs und/oder des Kraftfahrzeugs. Insbesondere umfasst der Motorträger eine Anlagefläche und/oder eine Anzahl an Befestigungselementen oder zumindest Aufnahmen für Befestigungselemente, wie Schrauben.

Der Freilauf weist eine äußere Hülse auf, die insbesondere im Montagezustand mechanisch direkt an dem Motorträger anliegt, zum Beispiel umfangsseitig an der etwaigen Aussparung. Geeigneterweise ist hierbei die Aussparung auf die Abmessungen der äußeren Hülse angepasst. Die äußere Hülse ist vorzugsweise hohlzylindrisch ausgestaltet und/oder konzentrisch zur Rotationsachse angeordnet. Mit anderen Worten wird mittels der äußeren Hülse die radial äußere Begrenzung des Freilaufs zumindest teilweise, vorzugsweise vollständig, gebildet. Hierbei ist die radiale Richtung (Radialrichtung) insbesondere in Bezug auf die Rotationsachse definiert.

An die äußere Hülse ist ein radial nach außen vorspringender Kragen angeformt. Mit anderen Worten sind der Kragen und die Hülse einstückig (monolithisch) miteinander. Geeigneterweise befindet sich der Kragen in axialer Richtung, also parallel zur Rotationsachse, an einem der Enden der Hülse. Vorzugsweise ist der äußere Umfang des Kragens größer als der Abmessungen der Aussparung des Motorträgers. Im Montagezustand liegt der Kragen zweckmäßigerweise an dem Motorträger an. Somit ist mittels des Kragens zumindest teilweise ein zu weites Einführen des Freilaufs in den Motorträger und somit eine Bewegung unterbunden. Folglich bildet der Kragen zumindest teilweise einen Bestandteil der Sicherungseinrichtung, mittels derer eine axiale Bewegung des Freilaufs bezüglich des Motorträger unterbunden wird. Bei Montage wird zunächst die Hülse in die Aussparung des Motorträgers eingeführt, bis der Kragen an diesem anliegt. Hierbei ragt die Hülse zumindest teilweise durch den Motorträger hindurch, insbesondere dessen Aussparung. Im Montagezustand ist der Kragen zweckmäßigerweise innerhalb eines Gehäuses des Elektromotors angeordnet. Somit wird dieser von dem Gehäuse vor etwaigen Beschädigungen geschützt, beispielsweise bei einer Montage des Elektromotors.

Der Kragen weist einen tangentialen Anschlag auf, der an einem korrespondierenden Zapfen des Motorträgers anliegt. Der tangentiale Anschlag liegt in tangentialer Richtung, insbesondere bezüglich der Rotationsachse, an dem Zapfen an. Somit wird mittels des Zapfens und des tangentialen Anschlags eine Drehung des Kragens, und somit auch der Hülse, bezüglich des Motorträgers in der tangentialen Richtung unterbunden, zumindest in eine Richtung. Der Anschlag des Kragens und der Zapfen bilden hierbei einen Teil der Sicherungseinrichtung, mittels dessen der Freilauf zumindest teilweise drehfest bezüglich des Motorträgers gehalten ist. Der tangentiale Anschlag ist beispielsweise ein radial nach außen gerichteter Vorsprung oder eine radial nach innen gerichtete Einkerbungen. Zumindest weicht aufgrund des tangentialen Anschlags die Form des Kragens von einer Ringform ab. Der Zapfen verläuft insbesondere in Axialrichtung, sodass dieser zweckmäßigerweise in axialer Richtung über den Kragen übersteht. Somit ist auch bei einer axialen Bewegung des Kragens, beispielsweise aufgrund von Erschütterung, stets ein Anliegen des Zapfens an dem tangentialen Anschlag sichergestellt.

Der Querschnitt des Zapfens senkrecht zur Rotationsachse ist insbesondere auf die jeweiligen Erfordernisse angepasst. Zweckmäßigerweise erfolgt aufgrund des tangentialen Anschlags und des Zapfens eine vollständige Unterbindung einer Bewegung des Freilaufs bezüglich des Motorträgers in der tangentialen Richtung. Insbesondere umgreift hierfür der Anschlag den Zapfen in tangentialer Richtung oder der Zapfen den Anschlag.

Beispielsweise weist der Zapfen über dessen Ausdehnung in Axialrichtung stets den konstanten Querschnitt auf. Somit ist eine Montage vereinfacht. Besonders bevorzugt ist ein Freiende des Zapfens, insbesondere das Ende des Zapfens, das nicht an weiteren Bestandteilen des Motorträgers angeformt ist, verformt. Die Verformung erfolgt geeigneterweise nach Montage des Freilaufs. Insbesondere ist die Verformung nach Art eines Niets, sodass der Zapfen nietförmig ausgestaltet ist. Mit anderen Worten wird der Freilauf mit dem Motorträger vernietet. Alternativ erfolgt ein Vertaumeln, also Radialnieten, sodass die Verformung mit einem vergleichsweise geringen Kraftaufwand erfolgt. Aufgrund der Verformung ist ein zerstörungsfreies Ablösen des Freilaufs von dem Motorträger nicht möglich, was eine Robustheit weiter erhöht. Zudem ist aufgrund der endseitigen Verformung eine Bewegung des Freilaufs in axialer Richtung bezüglich des Motorträger vollständig unterbunden und somit eine Zuverlässigkeit weiter erhöht. Aufgrund des Anschlags ist zudem die Bewegung in der tangentialen Richtung zumindest teilweise unterbunden.

Zweckmäßigerweise liegt der tangentiale Anschlag formschlüssig an dem Zapfen an. Somit ist einerseits eine Montage lediglich in einer bestimmten Position ermöglicht, was diese vereinfacht. Andererseits erfolgt aufgrund der formschlüssigen Anlage eine vergleichsweise effektive Kraftübertragung zwischen dem Zapfen und dem Kragen, weswegen eine Bewegung der Hülse bezüglich des Motorträgers vergleichsweise effektiv unterbunden ist. Auch ist bei einer vergleichsweise gro-ßen Krafteinwirkung eine Beschädigung des tangentialen Anschlags bzw. des Zapfens auf diese Weise unterbunden.

Beispielsweise weist der Zapfen einen runden Querschnitt auf, wobei der Querschnitt insbesondere senkrecht zur Rotationsachse ist. Mit anderen Worten ist der Zapfen zylinderförmig ausgestaltet. Somit ist eine Herstellung des Motorträgers vereinfacht. Zudem ist auf diese Weise ein freiendseitiges Verformen des Zapfens erleichtert, sofern dies erfolgt. Der tangentiale Anschlag ist hierbei geeigneterweise mittels einer Einkerbung gebildet. Die Einkerbung ist weist zweckmäßigerweise einen runden Querschnitt oder zumindest einen halbrunden Querschnitt auf, und der Zapfen liegt in der Einkerbung zweckmäßigerweise ein. Somit ist eine Robustheit erhöht.

Alternativ ist der Zapfen auf der dem Kragen zugewandten geradlinig ausgestaltet. Beispielsweise ist der Querschnitt des Zapfens rechteckförmig. Vorzugsweise ist der Zapfen symmetrisch bezüglich einer radialen Geraden ausgestaltet, und die dem Kragen zugewandten Seite ist senkrecht zu dieser radialen Geraden. Der tangentiale Anschlag ist hierbei vorzugsweise mittels einer Abflachung gebildet. Insbesondere ist der tangentiale Anschlag ebenfalls ein geradlinig ausgestalteter Bereich des Kragens, und der Kragen ist vorzugsweise anderweitig ringförmig ausgestaltet ist. Aufgrund der Geradlinigkeit erfolgt eine vergleichsweise effektive Übertragung von Kraft zwischen dem Zapfen und dem Kragen, wobei der Zapfen vergleichsweise robust ausgestaltet ist. Somit wird eine Verdrehung des Freilaufs bezüglich des Motorträgers effektiv verhindert. Auch ist hierbei eine Beschädigung der einzelnen Bauteile im Wesentlichen ausgeschlossen. Zudem ist aufgrund der vergleichsweise großen Ausdehnung des Zapfens eine Montage vereinfacht.

Vorzugsweise umfasst der Kragen einen weiteren tangentialen Anschlag. Zweckmäßigerweise ist dieser hinsichtlich des tangentialen Anschlags um 180° bezüglich der Rotationsachse versetzt. Somit ist eine Montage des Freilaufs an dem Motorträger in zumindest zwei unterschiedlichen Positionen ermöglicht, was eine Montage vereinfacht. Alternativ hierzu weist der Motorträger einen korrespondierenden weiteren Zapfen auf, der hinsichtlich des Zapfens um 180° bezüglich der Rotationsachse versetzt ist. Auch aufgrund des weiteren Zapfens ist eine Montage des Freilaufs bezüglich des Motorträgers in zumindest zwei unterschiedlichen Positionen möglich, was die Herstellung vereinfacht. In einer weiteren Alternative hierzu ist jeweils beispielsweise der Versatz vorhanden, der von 180° abweicht.

Besonders bevorzugt ist sowohl der weitere tangentialer Anschlag als auch der weitere Zapfen vorhanden, die beide jeweils zu dem tangentialen Anschlag bzw. Zapfen um 180° versetzt sind. Folglich erfolgt eine Sicherung des Freilaufs mit zwei Zapfen, weswegen eine Robustheit und Zuverlässigkeit erhöht sind. Sofern der Zapfen auf der dem Kragen zugewandten Seite geradlinig ausgestaltet ist, ist mittels der Zapfen insbesondere ein Zweiflach bereitgestellt. In einer weiteren Alternative hierzu unterscheiden sich beispielsweise die Ausgestaltung des Zapfens von der des weiteren Zapfens sowie die Ausgestaltung des tangentialen Anschlags von der des weiteren tangentialen Anschlags. Hierbei ist beispielsweise der Querschnitt des Zapfens rund, und bei dem weiteren Zapfen ist die dem Kragen zugewandte Seite geradlinig ausgestaltet.

Besonders bevorzugt weist der Elektromotor insgesamt vier Zapfen und vier Anschläge auf, die zueinander bezüglich der Rotationsachse jeweils um 90° versetzt sind. Hierbei sind die zueinander um 180° versetzten Zapfen zweckmäßigerweise jeweils zueinander gleichartig ausgestaltet, wobei die um 90° zueinander versetzten Zapfen voneinander abweichend ausgestaltet sind. Insbesondere weisen zwei der Zapfen einen runden Querschnitt auf, wohingegen bei den verbleibenden Zapfen die jeweilige dem Kragen zugewandte Seite geradlinig ausgestaltet ist. Aufgrund einer derartigen Ausgestaltung ist eine Robustheit weiter erhöht. Insbesondere sind die Zapfen freiendseitig verformt, die den runden Querschnitt aufweisen, sodass mittels derer insbesondere eine axiale Sicherung erfolgt. Mittels der zumindest teilweise geradlinig ausgestalteten Zapfen erfolgt vorzugsweise eine tangentiale Sicherung des Freilaufs bezüglich des Motorträgers. Die tangentialen Anschläge sind vorzugsweise entsprechend des jeweils zugeordneten Zapfens angepasst.

Besonders bevorzugt weist die Sicherungseinrichtung eine Schraube auf, mittels derer der Freilauf an dem Motorträger befestigt ist. Insbesondere umfasst der Freilauf den Kragen, und die Schraube ragt zumindest teilweise durch den Kragen. Zweckmäßigerweise liegt ein Kopf der Schraube an den Kragen an und presst diesen vorzugsweise gegen den Motorträger. Zumindest jedoch ist der Kragen zwischen dem Schraubenkopf und dem Motorträger zweckmäßigerweise angeordnet, insbesondere gehalten. Geeigneterweise weist der Kragen ein Loch auf, durch den die Schraube geführt ist. Somit wird mittels der Schraube sowohl eine axiale als auch tangentiale Bewegung des Freilaufs bezüglich des Motorträgers unterbunden. Die Schraube ist zum Beispiel eine Gewindeschraube. Vorzugsweise erfolgt die Befestigung der Schraube an dem Motorträger von einer Gehäuseinnenseite des Elektromotors. Alternativ hierzu erfolgt die Anbringung der Schraube von einer Gehäuseaußenseite des Elektromotors.

Zweckmäßigerweise weist der Elektromotor einen Stator auf, der drehfest bezüglich des Motorträgers ist. Der Stator weist geeigneterweise eine Anzahl an Magneten auf. Insbesondere umfasst der Elektromotor ein Gehäuse, innerhalb dessen der Stator angeordnet ist, und das zumindest teilweise mittels des Motorträgers verschlossen ist. Das Gehäuse ist vorzugsweise im Wesentlichen hohlzylindrisch ausgestaltet, und der Motorträger ist insbesondere an einer der Stirnseiten des Gehäuses angeordnet und vorzugsweise an diesem befestigt. Sofern der an der Hülse angeformt Kragen vorhanden ist, ist dieser geeigneterweise auf der dem Stator zugewandten Seite des Motorträger angeordnet, sodass der Kragen geschützt ist.

Alternativ oder besonders bevorzugt Kombination hierzu weist der Rotor ein Blechpaket auf, das drehfest an der Motorwelle befestigt ist. An dem Blechpaket ist geeigneterweise eine Anzahl an Magneten gehalten, die vorzugsweise mit dem Magneten des etwaigen Stators bei Betrieb wechselwirken. Beispielsweise umfasst der Stator eine Anzahl an Permanentmagneten, und der Rotor weist eine Anzahl an Elektromagneten auf. Hierbei ist der Elektromotor beispielsweise als bürstenbehafteter Kommutatormotor ausgestaltet. Besonders bevorzugt jedoch ist der Elektromotor als bürstenloser Elektromotor ausgestaltet, beispielsweise als bürstenloser Gleichstrommotor (BLDC). Somit weist der Stator eine Anzahl an Elektromagneten auf, die mittels einer Elektronik bestromt werden. Geeigneterweise sind die Elektromagneten zu mehreren Phasen, beispielsweise drei Phasen, zusammengeschaltet, die untereinander wiederum beispielsweise in einer Dreiecks- oder Sternschaltung verschaltet sind. An dem Blechpaket ist zweckmäßigerweise eine Anzahl an Permanentmagneten befestigt, beispielsweise an dessen Umfang oder in dieses eingebettet.

Zum Beispiel weist der Elektromotor eine Nenn- und/oder Maximalleistung zwischen 10 W und 10 kW, zwischen 50 W und 500 W oder zwischen 100 W und 200 W auf. Geeigneterweise ist der Elektromotor geeignet, insbesondere vorgesehen und eingerichtet, mittels eines Bordnetzes des Kraftfahrzeugs bestromt zu werden. Hierbei ist eine an dem Elektromotor im Betriebszustand anliegende elektrische Spannung beispielsweise 12 V, 24 V oder 42 V. Alternativ hierzu ist die elektrische Spannung zwischen 200 V und 800 V, sodass ein Hochvoltbordnetz herangezogen werden kann.

Der Pumpenantrieb ist ein Bestandteil eines Kraftfahrzeugs, wie eines Personenkraftwagens (Pkw) oder eines Nutzkraftwagens, zum Beispiel eines Lastkraftwagens (Lkw) oder Busses. Der Pumpenantrieb umfasst vorzugsweise ein Getriebe, das zweckmäßigerweise mehrere Zahnräder umfasst, die untereinander, zumindest in Abhängigkeit von einer bestimmten Schaltstellung, in Eingriff sind. Hierbei ist, beispielsweise in Abhängigkeit von der etwaigen Schaltstellung, zumindest eines der Zahnräder, vorzugsweise eine Anzahl der Zahnräder, mechanisch von weiteren der Zahnräder des Getriebes getrennt. Beispielsweise ist das Getriebe ein Umlaufrädergetriebe, wie ein Planetengetriebe.

Der Pumpenantrieb weist ferner einen Elektromotor auf. Beispielsweise ist der Elektromotor ein bürstenbehafteter Kommutatormotor. Besonders bevorzugt jedoch ist der Elektromotor bürstenlos ausgestaltet und beispielsweise ein bürstenloser Gleichstrommotor (BLDC). Der Elektromotor ist zum Beispiel ein Asynchronmotor oder ein Synchronmotor. Der Elektromotor weist einen Rotor mit einer um eine Rotationsachse gelagerten Motorwelle auf. Die Motorwelle ist mittels eines Freilaufs mit einem Motorträger gekoppelt, und der Freilauf ist mittels einer Sicherungseinrichtung an dem Motorträger gehalten. Mittels der Sicherungseinrichtung wird bei Betrieb vorzugsweise eine axiale und/oder tangentiale Bewegung des Freilaufs bezüglich des Motorträgers unterbunden. An der Motorwelle ist eines der Zahnräder, beispielsweise mehrere der Zahnräder, des Getriebes drehfest befestigt. Beispielsweise ist das Zahnrad einstückig mit der Motorwelle und somit an dieser angeformt.

Geeigneterweise ist das Getriebe mittels eines zusätzlichen Antriebs angetrieben. Der zusätzliche Antrieb ist beispielsweise ein etwaiger Verbrennungsmotor des Kraftfahrzeugs. Aufgrund des Freilaufs ist ein Rotieren der Motorwelle lediglich in eine Richtung bezüglich des Motorträgers ermöglicht. Folglich ist aufgrund des Freilaufs insbesondere ein generatorischer Betrieb des Elektromotors unterbunden. Infolgedessen werden in etwaigen Elektromagneten des Elektromotors keine elektrischen Spannungen induziert, die auf ein etwaiges Bordnetz und oder ein Bussystem des Kraftfahrzeugs rückwirken könnten.

Vorzugsweise ist im Montagezustand mittels des Getriebes ein Pumpenkopf angetrieben, und der Pumpenkopf ist vorzugsweise an dem Getriebe befestigt. Sofern das Getriebe ein Umlaufrädergetriebe ist, ist zweckmäßigerweise das Sonnenrad das an der Motorwelle befestigte Zahnrad. Der Pumpenkopf ist zweckmäßigerweise an dem Planetenträger befestigt, sodass dieser mit der gleichen Drehgeschwindigkeit wie der Planetenträger rotiert wird. Das Hohlrad ist geeigneterweise mittels des etwaigen Verbrennungsmotors angetrieben. Aufgrund des Freilaufs ist somit eine Rotation des Sonnenrads in eine ungewünschte Richtung bei Antrieb des Hohlrads mittels des Verbrennungsmotors unterbunden.

Der Pumpenantrieb ist geeigneterweise ein Bestandteil einer Pumpe, wie einer Wasserpumpe. Besonders bevorzugt jedoch wird mittels der Pumpe ein Öl gepumpt. Das Öl ist beispielsweise ein Hydrauliköl, und die Pumpe ist eine Hydraulikölpumpe. Besonders bevorzugt jedoch ist die Pumpe eine Schmiermittelpumpe, mittels derer Öl zur Schmierung von einzelnen Bauteilen gepumpt wird. Geeigneterweise ist hierbei die Ölpumpe ein Bestandteil eines Getriebes oder eines Verbrennungsmotors oder dient zumindest dem Pumpen von Öl, durch den Verbrennungsmotor bzw. das Getriebe.

Die im Zusammenhang mit dem Elektromotor genannten Vorteile und Weiterbildungen sind sinngemäß auch auf den Pumpenantrieb zu übertragen und umgekehrt.

Nachfolgend werden Ausführungsbeispiele der Erfindung anhand einer Zeichnung näher erläutert. Darin zeigen:
- Fig. 1: schematisch ein Kraftfahrzeug mit einer Ölpumpe,
- Fig. 2: schematisch die einen Pumpenantrieb mit einem Elektromotor aufweisende Ölpumpe,
- Fig. 3: perspektivisch einen Zapfen aufweisenden Motorträger des Elektromotors sowie einen Freilauf,
- Fig. 4: den an dem Motorträger gehaltenen Freilauf,
- Fig. 5: in einer Schnittdarstellung längs einer Rotationsachse den Zapfen bei Montage,
- Fig. 6: gemäß Figur 5 den Zapfen nach der Montage,
- Fig. 7, 8: gemäß Figur 3 jeweils eine weitere Ausgestaltungsform des Motorträgers.

Einander entsprechende Teile sind in allen Figuren mit den gleichen Bezugszeichen versehen.

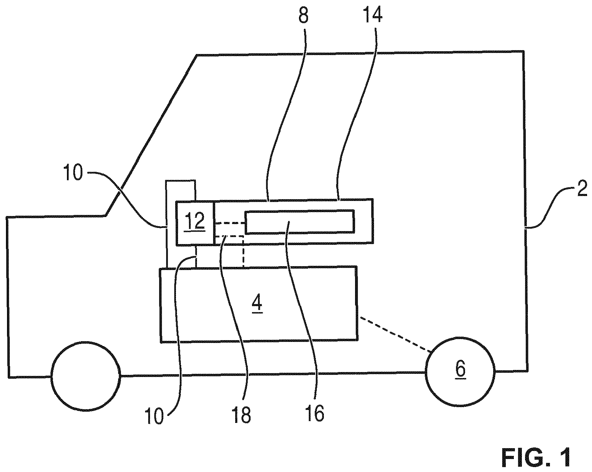

In Figur 1 ist schematisch vereinfacht ein Kraftfahrzeug 2 mit einem Verbrennungsmotor 4 gezeigt. Mittels des Verbrennungsmotors 4 sind einige der Räder 6 des Kraftfahrzeugs 2 angetrieben, beispielsweise über ein nicht näher dargestelltes Getriebe und/oder einen Elektromotor, wobei mittels des Verbrennungsmotors 4 die für den Elektromotor erforderliche elektrische Energie zumindest teilweise bereitgestellt wird.

Ferner weist das Kraftfahrzeug 2 eine Ölpumpe 8 auf, mittels derer ein sich zumindest teilweise innerhalb des Verbrennungsmotors 4 befindendes Öl umgewälzt wird. Hierfür ist die Ölpumpe 8 mittels mehrerer Leitungen 10 fluidtechnisch mit dem Verbrennungsmotor 4 verbunden. Somit wird bei Betrieb der Ölpumpe 8 Öl von dem Verbrennungsmotor 4 zu einem nicht näher dargestellten Filter sowie zu einem Ölkühler und von dort zurück in den Verbrennungsmotor 4 gefördert. Infolgedessen wird der Verbrennungsmotor 4 geschmiert, sodass eine Reibung verhindert ist. Auch erfolgt eine Abkühlung des Verbrennungsmotors 4, da mittels des Öls Wärme zu dem Ölkühler abtransportiert wird. Aufgrund des Ölfilters werden sich in dem Öl befindende Fremdpartikel abgeschieden, sodass eine Betriebsdauer des Verbrennungsmotors 4 erhöht ist.

Die Ölpumpe 8, die eine Schmiermittelpumpe ist, weist einen Pumpenkopf 12 mit einem nicht näher dargestellten Flügelrad auf, mittels dessen das Öl durch die Leitungen 10 bewegt wird. Der Pumpenkopf 12 ist mittels eines Pumpenantriebs 14 angetrieben, der an dem Pumpenkopf 12 befestigt ist. Der Pumpenantrieb 14 weist einen Elektromotor 16 sowie einen zusätzlichen Antrieb 18 auf, der mittels des Verbrennungsmotors 4 bereitgestellt ist. Somit wird der Pumpenkopf 12 entweder mittels des Elektromotors 6, mittels des zusätzlichen Antriebs 18 oder mit beiden angetrieben.

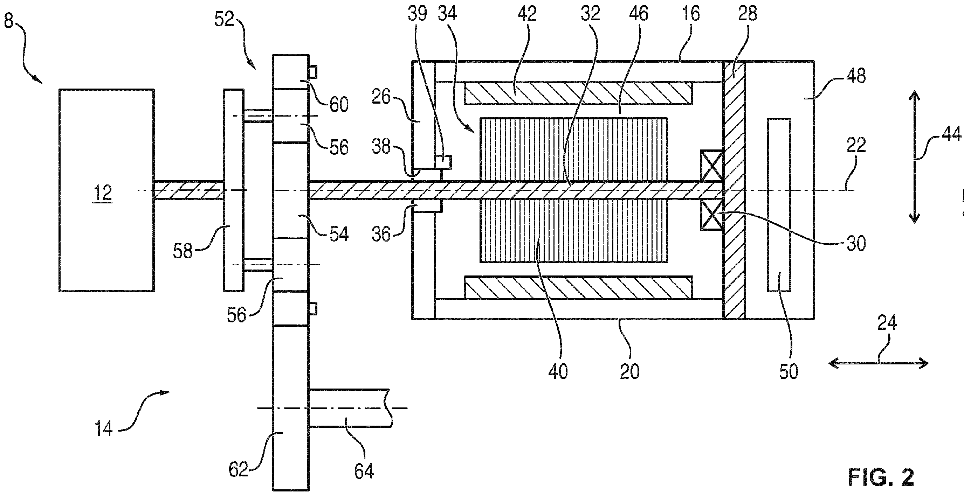

In Figur 2 ist die Ölpumpe 8 schematisch vereinfacht gezeigt. Der Elektromotor 16 weist ein hohlzylindrisches Gehäuse 20 auf, das ein Aluminiumdruck ist und sich entlang einer Rotationsachse 22 erstreckt und konzentrisch zu dieser angeordnet ist. An einem Ende des Gehäuses 20 in einer axialen Richtung 24, die parallel zur Rotationsachse 22 ist, ist das Gehäuse 20 mittels eines Motorträgers 26 verschlossen. Die gegenüberliegende Seite des Gehäuses 20 ist mittels eines B-seitigen Lagerschilds 28 verschlossen, an dem ein Kugellager 30 befestigt ist. Mittels des Kugellagers 30 ist eine Motorwelle 32 eines Rotors 34 drehbar um die Rotationsachse 22 gelagert. Die Motorwelle 32 erstreckt sich parallel zur Rotationsachse 22 und ist konzentrisch zu dieser angeordnet. Zudem ist die Motorwelle 32 mittels eines Freilaufs 36 gelagert und ist folglich an diesem angebunden. Der Freilauf 36 ist mit dem Motorträger 26 gekoppelt und dort zumindest teilweise in einer Aussparung 38 des Motorträgers 32 angeordnet. Dort wird der Freilauf 36 mittels einer Sicherungseinrichtung 39 drehfest bezüglich des Motorträgers 26 gehalten, sodass eine Bewegung des Freilaufs 38 in der axialer Richtung 24 sowie eine Drehung um die Rotationsachse 22 unterbunden ist.

Mittels des Freilaufs 36 ist sichergestellt, dass die Motorwelle 32 lediglich in eine Richtung um die Rotationsachse 22 rotiert werden kann. In die entgegengesetzte Richtung erfolgt hingegen eine Blockierung. Die Motorwelle 32 ist aus einem Stahl erstellt und trägt ein Blechpaket 40 des Rotors 34, das drehfest an der Motorwelle 32 befestigt und zwischen dem Motorträger 26 sowie dem B-seitigen Lagerschild 28 in der axialer Richtung 24 angeordnet ist. Mittels des Blechpakets 40 sind mehrere nicht näher dargestellte Permanentmagneten gehalten.

Das Blechpaket 40 ist umfangsseitig von einem Stator 42 umgeben, der in einer radialen Richtung 44 von dem Blechpaket und dem vollständigen Rotor 34 mittels eines umlaufenden Luftspalts 46 beabstandet ist. Der Stator 42 weist eine Anzahl an nicht näher dargestellten Elektromagneten auf, die zu drei Phasen zusammengeschaltet sind. Somit ist der Elektromotor 16 als bürstenlose Gleichstrommotoren (BLDC) ausgestaltet. Der Stator 42 ist innerhalb des Gehäuses 20 angeordnet und an diesem befestigt, das an dem Motorträger 26 befestigt ist. Somit ist der der Stator 42 drehfest bezüglich des Motorträgers 26. An dem B-seitigen Lagerschild 28 ist ein Elektronikfach 48 mit einer darin angeordneten Elektronik 50 angebunden. Bei Betrieb erfolgt eine Bestromung der Elektromagneten des Stators 42 mittels der Elektronik 50.

Der Pumpenantrieb 14 weist ferner ein Getriebe 52 in Form eines Umlaufrädergetriebes auf, das ein Zahnrad 54 umfasst, das als Sonnenrad fungiert. Das Zahnrad 54 ist an einem Freiende der Motorwelle 32 drehfest befestigt, das durch den Motorträger 26 hindurch ragt. Somit ist das Zahnrad 54 ebenfalls um die Rotationsachse 22 drehbar gelagert, und das Umlaufrädergetriebe 52 ist bezüglich der Rotationsachse 22 ausgerichtet. Das (Umlaufräder-)Getriebe 52 weist mehrere Planetenräder 56 auf, die drehbar an einem gemeinsamen Planetenträger 58 befestigt sind, der wiederum drehbar um die Rotationsachse 22 gelagert ist. Die Planetenträger 56 sind hierbei ebenfalls Zahnräder und zumindest teilweise mit dem Zahnrad 54 in Eingriff. An dem Planetenträger 58 ist der Pumpenkopf 12 oder zumindest eine Welle des Pumpenkopfs 12 drehfest befestigt. Die Planetenräder 56 werden von einem Hohlrad 60 umgeben, das sowohl außen- als auch innenverzahnt ist. Die Innenverzahnung ist in Eingriff mit den Planetenrädern 56. Die Außenverzahnung des Hohlrads 60 ist in Eingriff mit einem weiteren Zahnrad 62, das über eine Welle 64 mittels des Verbrennungsmotors 4 angetrieben ist.

Bei einem Stillstand des Verbrennungsmotors 4 ist das weitere Zahnrad 62 und somit auch das Hohlrad 60 aufgrund der vergleichsweise großen Reibung innerhalb des Verbrennungsmotors 4, insbesondere dessen Kurbelwelle, sowie aufgrund der erforderlichen Kompression von etwaigen Zylindern blockiert. Sofern der Elektromotor 16 dabei betrieben wird, wird eine Rotationsbewegung des Zahnrads 54 aufgrund der Planetenräder 56 auf den Planetenträger 58 übertragen und somit Pumpenkopf 12 angetrieben. Ein derartiger Betrieb erfolgt insbesondere, sofern das Kraftfahrzeug 2 betrieben ist, jedoch der Verbrennungsmotor 4 kurzzeitig stillgesetzt ist, insbesondere bei einem Halt an einer Ampel.

Falls der Verbrennungsmotor 4 angetrieben ist und somit die Welle 64 rotiert wird, wird das Hohlrad 60 angetrieben. Diese Rotationsbewegung wird auf die Planetenräder 56 übertragen. Aufgrund des Freilaufs 36 erfolgt keine Übertragung der Drehbewegung auf die Motorwelle 32. Hierfür ist die Drehrichtung der Welle 64 sowie die Blockierrichtung des Freilauf 36 geeignet aufeinander abgestimmt. Infolgedessen erfolgt ein Antrieb des Planetenträger 58 und folglich auch des Pumpenkopfes 12. Somit wird keine Energie zum Antrieb des Rotors 34 verwendet, was eine Effizienz erhöht. Zudem ist ein Induzieren von elektrischer Spannung in die Elektromagneten des Stators 42 auf diese Weise unterbunden, sodass eine Überlastung der Elektronik 50 vermieden ist, die anderweitig zur deren Zerstörung und/oder zur Ausbreitung von Spannungsspitzen in einem nicht näher dargestellten Bordnetz und/oder Bussystem des Kraftfahrzeugs 2 führen könnte. Zusammenfassend wird dann, wenn der Verbrennungsmotor 4 betrieben wird, der Pumpenkopf 12 angetrieben und somit das Öl gefördert. Eine Bestromung des Elektromotors 16 ist hierbei nicht erforderlich, weswegen dieser nicht übermäßig erhitzt und daher belastet wird. Somit können vergleichsweise kostengünstige Komponenten herangezogen werden.

Falls, beispielsweise aufgrund einer vergleichsweise hohen Leistungsanforderung und/oder einer vergleichsweise starken Erhitzung des Verbrennungsmotors 4, die zu fördernde Ölmenge erhöht werden soll, ist es zudem möglich, zusätzlich den Elektromotor 16 zu betreiben und somit auch das Zahnrad 54 anzutreibenden. Folglich wird der Pumpenkopf 12 sowohl mittels des Verbrennungsmotors 4 als auch mittels des Elektromotors 16 angetrieben, und die Rotationsgeschwindigkeiten Planetenträger 58 ist aufgrund des Antriebs des Zahnarzt 54 sowie des weiteren Zahnrads 62 erhöht.

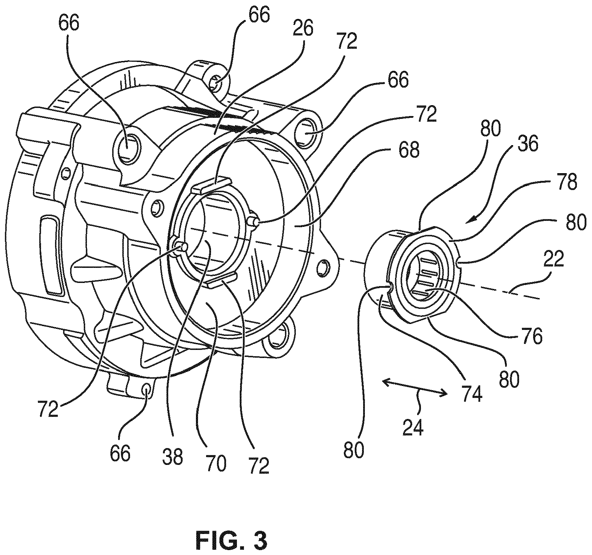

In Figur 3 ist perspektivisch der Motorträger 26 gezeigt. Der Motorträger 26 weist eine Anzahl an Aufnahmen 66 für nicht näher dargestellte Befestigungselemente auf, mittels derer der Motorträger 26 an dem Pumpenkopf 12, dem Getriebe 52 und/oder weiteren Bestandteil des Kraftfahrzeugs 2 im Montagezustand befestigt ist. Zudem weist der Motorträger 26 einen auf das nicht näher dargestellte Gehäuse 20 hin gewandten topfförmigen Abschnitt 68 mit einem Topfboden 70 auf, der senkrecht zur Rotationsachse 22 ist. Durch den Topfboden 70 ragt die Aussparung 38, die zylindrisch und konzentrisch zur Rotationsachse 22 ist.

An dem Topfboden 70 sind insgesamt vier Zapfen 72 angeformt, die zueinander bezüglich der Rotationsachse 22 um 90° versetzt sind und sich in axialer Richtung 24 erstrecken. Die Zapfen 72 sind von der Aussparung 38 in radialer Richtung 44 weg versetzt, jedoch lediglich um einen vergleichsweise geringen Wert, beispielsweise zwischen 2 mm und 5 mm. Jeweils die um 180° bezüglich der Rotationsachse 22 zueinander versetzten Zapfen 72 sind zueinander baugleich, wobei zwei der Zapfen 72 einen senkrecht zur Rotationsachse 22runden Querschnitt auf. Die verbleibenden Zapfen 72 weisen einen rechteckförmigen Querschnitt auf und sind achsensymmetrisch bezüglich einer gemeinsamen radialen Geraden. Die beiden Zapfen 72, die einen im Wesentlichen rechteckförmigen Querschnitt aufweisen, weisen somit eine der Aussparung 38 zugewandte geradlinig ausgestalteten Seite auf, und mittels dieser Zapfen 72 ist ein Zweiflach gebildet. Zusammenfassend sind die Zapfen 72 insgesamt punktsymmetrisch sowie achsensymmetrisch bezüglich zweier zueinander senkrechter radialer Geraden angeordnet sowie ausgestaltet.

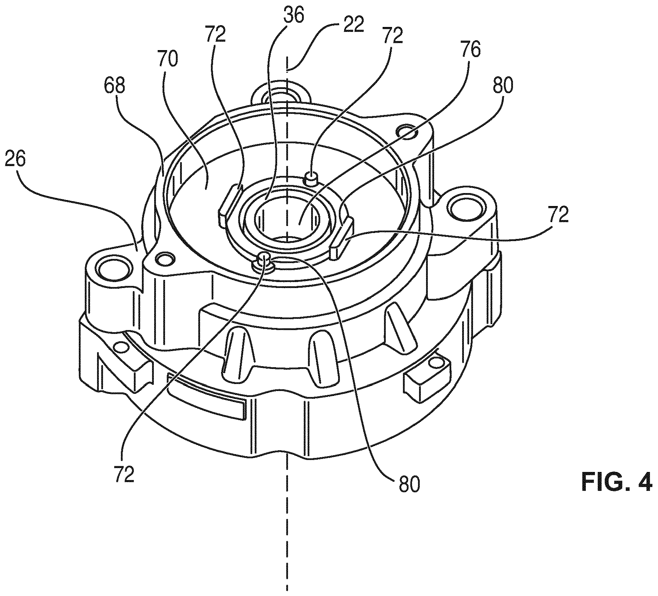

Der Freilauf 36 weist eine hohlzylindrisch ausgestaltete äußere Hülse 74 auf, die im Montagezustand, der in Figur 4 gezeigt ist, in der Aussparung 38 angeordnet ist und an dem Motorträger 26 umfangsseitig anliegt. Hierbei ist zwischen der äu-ßeren Hülse 74 und dem Motorträger 26 zweckmäßigerweise eine Presspassung gebildet. Der Freilauf 36 umfasst ferner eine innere Hülse 76, die ebenfalls hohlzylindrisch ausgestaltet und konzentrisch zur Rotationsachse 22 angeordnet ist. Die innere Hülse 76 ist von der äußeren Hülse 74 aufgenommen und bezüglich dieser drehbar in eine Richtung gelagert ist. Mittels einer nicht näher dargestellten Blockiervorrichtung ist eine Rotation in die entgegengesetzte Richtung unterbunden. Im Montagezustand ist die innere Hülse 76 an der Motorwelle 32 drehfest befestigt.

An der äußeren Hülse 74 ist an einem Ende in der axialen Richtung 24 ein radial nach außen vorspringenden Kragen 78 angeformt. Der äußere Durchmesser des Kragens 78 ist größer als der Durchmesser der Aussparung 38, und zur Montage wird der Freilauf 36 in der axialer Richtung 24 mit der dem Kragen 78 gegenüberliegenden Seite der äußeren Hülse 74 in die Aussparung 38 eingeführt, bis der Kragen 78 an dem Motorträger 26 anschlägt. Somit bildet der Kragen 78 zumindest teilweise die Sicherungseinrichtung 39.

Zudem weist der Kragen insgesamt vier tangentiale Anschläge 80 auf, die zueinander bezüglich der Rotationsachse um 90° versetzt sind. Im Montagezustand ist jedem der tangentialen Anschläge 80 einer der Zapfen 72 zugeordnet, an dem der jeweilige tangentiale Anschlag 80 formschlüssig anliegt. Zusammenfassend liegt jeder tangentiale Anschlag 80 an jeweils dem zugeordneten, also dem korrespondierenden, Zapfen 72 formschlüssig an. Somit sind zwei der tangentialen Anschläge 80 mittels einer halbrunden Einkerbung bereitgestellt, nämlich die, denen die Zapfen 72 mit dem runden Querschnitt zugeordnet sind. Die verbleibenden tangentialen Anschläge 80 sind mittels einer Abflachung gebildet, also einer im Wesentlichen geradlinigen äußeren Kante des Kragens 78.

Aufgrund des Eingriffs der Zapfen 72 bzw. der Anlage der Anschläge 80 an den Zapfen 72 wird eine Rotationsbewegung des Kragens 78 um die Rotationsachse 22 und somit der äußeren Hülse 74 bezüglich des Motorträger 26 unterbunden. Somit bilden die Zapfen 72 sowie die tangentialen Anschläge 80 teilweise die Sicherungseinrichtung 39, mittels derer eine Rotation des Freilaufs 36 bezüglich des Motorträgers 26 unterbunden ist. Aufgrund des Kragens 78 wird zudem ein axiales Durchrutschen des Freilaufs 36 durch die Motorträger 26 verhindert und somit dieser auch teilweise in axialer Richtung 24 gesichert.

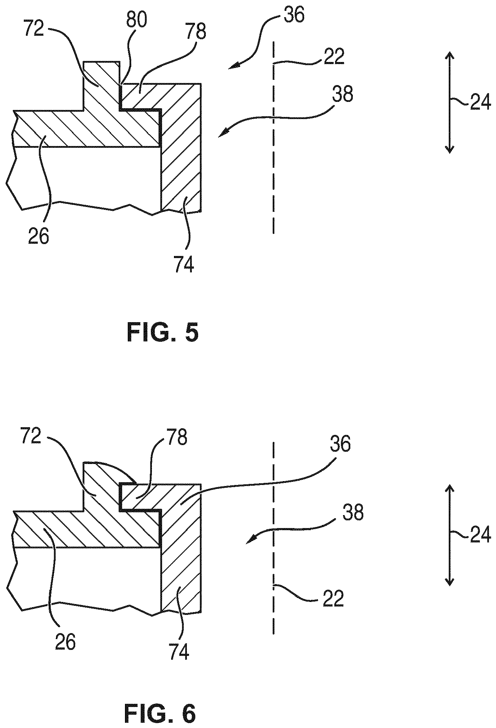

In Figur 5 ist in einer Schnittdarstellung entlang der Rotationsachse 22 schematisch vereinfacht der Freilauf 36 mit der äußeren Hülse 74 sowie dem Kragen 78 gezeigt, der an dem Motorträger 26 anliegt. Die Zapfen 72 stehen hierbei in axialer Richtung 24 bezüglich des Kragens 78 über, sodass auch bei einer Bewegung des Freilauf 36 in axialer Richtung 24 stets der Eingriff des Zapfens 72 mit in dem jeweiligen tangentialen Anschlag 80 erhalten bleibt.

In Figur 6 ist gemäß Figur 5 eine Weiterbildung des Motorträgers 26 gezeigt. Hierbei ist der Zapfen 72 freiendseitig verformt, und zwar vertaumelt. Somit überdeckt der Zapfen 72 an dessen Freiende den Kragen 78 in Axialrichtung 24 zumindest teilweise, weswegen der Freilauf 36 von dem Motorträger 26 nicht mehr entfernt werden kann. In einer weiteren, nicht näher dargestellten Ausführungsform ist das Ende des Zapfens 72 nietförmig verformt. Beispielsweise werden sämtliche vorhandenen Zapfen 72 verformt. Bevorzugt jedoch werden lediglich die Zapfen 72, die den runden Querschnitt aufweisen, verformt. Bei diesen ist ein vergleichsweise geringer Kraftaufwand zur Verformung des jeweiligen Freiendes erforderlich.

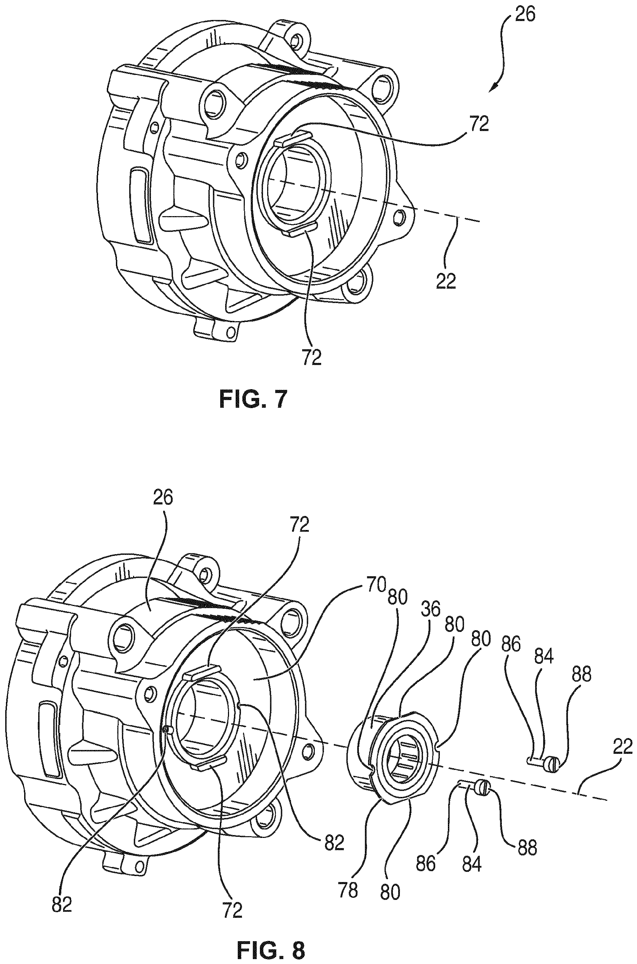

In Figur 7 ist eine Abwandlung des Motorträgers 26 gezeigt. Als einzige Unterschied zur vorhergehenden Ausführungsform sind die Zapfen 72 mit dem runden Querschnitt weggelassen, sodass lediglich die Zapfen 72 mit dem rechteckförmigen Querschnitt vorhanden sind. Somit ist lediglich der Zweiflach vorhanden. Der nicht näher dargestellte Freilauf 36 weist insbesondere lediglich die beiden tangentialen Anschläge 80 auf, die mittels der Abflachung erstellt sind. In einer weiteren Alternative ist der Freilauf 36 jedoch nicht verändert und entspricht der in Figur 3 gezeigten Variante. In einer weiteren Variante, die nicht dargestellt ist, sind lediglich die Zapfen 72 mit den runden Querschnitten vorhanden, wohingegen die Zapfen 72, die den rechteckförmigen Querschnitt aufweisen, weggelassen sind. Insbesondere erfolgt hierbei eine freiendseitig Verformung der Zapfen 72. Vorzugsweise sind bei sämtlichen Ausgestaltungsformen sich entsprechende oder zumindest zueinander baugleiche Zapfen 72 zueinander bezüglich der Rotationsachse 22 um 180° versetzt, sodass der Freilauf 36 in zwei unterschiedlichen Positionen angeordnet werden kann, was eine Montage vereinfacht.

In Figur 8 ist eine letzte Ausgestaltungsform des Motorträgers 26 gezeigt, wobei der Freilauf 36 der ersten Ausgestaltungsform entspricht. Es sind hierbei wiederum lediglich die Zapfen 72 mit dem rechteckförmigen Querschnitt vorhanden. Anstatt der Zapfen 72 mit den runden Querschnitten weist der Topfboden 70 jeweils ein Loch 82 auf, in die im Montagezustand jeweils eine Schraube 84 eingedreht ist. Hierbei ist ein Schraubenschafft 86 jeder Schraube 84 in das jeweilige Loch 82 eingehdreht. Jeder Schraubenschaft 86 liegt dabei zumindest teilweise in jeweils einem der kerbenförmig ausgestalteten tangentialen Anschlägen 80 des Kragens 78 ein. Mittels des jeweiligen Schraubenkopfes 88, der größer als die Abmessung des jeweiligen tangentialen Anschlags 80 ist, wird der Kragen 78 gegen den Topfboden 70 gepresst und somit dort gehalten. In einer nicht näher dargestellten Variante, sind in dem Kragen 78 zusätzliche Löcher vorhanden, die insbesondere umlaufend geschlossen sind, und durch die der jeweilige Schraubenschaft 86 ragt. Somit ist eine Positionierung der Schrauben 84 vereinfacht.

Zusammenfassend ist mittels der Sicherungseinrichtung 39 eine Verdrehsicherung realisiert, mittels derer ein etwaiges zu übertragendes Drehmoment aufgenommen wird. Hierbei sind zumindest zwei der Zapfen 72 zweckmäßigerweise als Zweiflach ausgestaltet. Die weiteren der Zapfen 72 sind insbesondere nach Positionierung des Freilaufs 36 nietenförmig verformt, und diese sind zweckmäßigerweise nach Art von Taumelnieten ausgestaltet. Somit wird eine formschlüssige Verbindung mit dem Freilauf 36 erstellt, und etwaige in axialer Richtung 24 wirkende Kräfte werden aufgenommen.

Vorzugsweise ist zudem ein Pressverband zwischen der Mantelfläche der äußeren Hülse 74 und der Begrenzung der Aussparung 38 des Motorträgers 26 vorhanden. In einer weiteren Alternative werden die Zapfen 72, die den rechteckförmigen Querschnitt aufweisen, ebenfalls verstemmt und somit nach Art eines Niets verformt. Hierbei sind beispielsweise die Zapfen 72 mit dem runden Querschnitt nicht vorhanden. Alternativ sind anstatt dieser beispielsweise die Schrauben 84 vorhanden, wobei die verbleibenden Zapfen 72 entweder verstemmt oder nicht verstemmt sind.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Verbrennungsmotor
- 6: Rad
- 8: Ölpumpe
- 10: Leitung
- 12: Pumpenkopf
- 14: Pumpenantrieb
- 16: Elektromotor
- 18: zusätzlicher Antrieb
- 20: Gehäuse
- 22: Rotationsachse
- 24: axiale Richtung
- 26: Motorträger
- 28: B-seitiges Lagerschild
- 30: Kugellager
- 32: Motorwelle
- 34: Rotor
- 36: Freilauf
- 38: Aussparung
- 39: Sicherungseinrichtung
- 40: Blechpaket
- 42: Stator
- 44: radiale Richtung
- 46: Luftspalt
- 48: Elektronikfach
- 50: Elektronik
- 52: Getriebe
- 54: Zahnrad
- 56: Planetenrad
- 58: Planetenträger
- 60: Hohlrad
- 62: weiteres Zahnrad
- 64: Welle
- 66: Aufnahme
- 68: topfförmiger Abschnitt
- 70: Topfboden
- 72: Zapfen
- 74: äußere Hülse
- 76: innere Hülse
- 78: Kragen
- 80: tangentialer Anschlag
- 82: Loch
- 84: Schraube
- 86: Schraubenschaft
- 88: Schraubenkopf

## Patentansprüche

1. Elektromotor (16) für einen Pumpenantrieb (14) eines Kraftfahrzeugs (2), insbesondere einer Ölpumpe (8), mit einem Rotor (34), der eine um eine Rotationsachse (22) drehbar gelagerte Motorwelle (32) umfasst, die mittels eines Freilaufs (36) mit einem Motorträger (26) gekoppelt ist, wobei der Freilauf (36) mittels einer Sicherungseinrichtung (39) an dem Motorträger (26) gehalten ist,
**dadurch gekennzeichnet,**
**dass** der Freilauf (36) eine äußere Hülse (74) und einen daran angeformten radial nach außen vorspringenden Kragen (78) aufweist, und dass der Kragen (78) einen tangentialen Anschlag (80) aufweist, der an einem korrespondierenden Zapfen (72) des Motorträgers (26) anliegt.

2. Elektromotor (16) nach Anspruch 1,
**dadurch gekennzeichnet,**
**dass** der Zapfen (72) freiendseitig verformt ist.

3. Elektromotor (16) nach Anspruch 1 oder 2,
**dadurch gekennzeichnet,**
**dass** der tangentiale Anschlag (80) formschlüssig an dem Zapfen (72) anliegt.

4. Elektromotor (16) nach einem der Ansprüche 1 bis 3,
**dadurch gekennzeichnet,**
**dass** der Zapfen (72) einen runden Querschnitt aufweist, und dass der tangentiale Anschlag (80) mittels einer Einkerbung gebildet ist.

5. Elektromotor (16) nach einem der Ansprüche 1 bis 3,
**dadurch gekennzeichnet,**
**dass** der Zapfen (72) auf der dem Kragen (78) zugewandten Seite geradlinig ausgestaltet ist, und dass der tangentiale Anschlag (80) mittels einer Abflachung gebildet ist.

6. Elektromotor (16) nach einem der Ansprüche 1 bis 5,
**gekennzeichnet durch**
einen weiteren tangentialen Anschlag (80) und/oder einen korrespondierenden weiteren Zapfen (72), die zu dem tangentialen Anschlag (80) bzw. Zapfen (72) um 180° bezüglich der Rotationsachse (22) versetzt sind.

7. Elektromotor (16) nach einem der Ansprüche 1 bis 6,
**gekennzeichnet durch**
einen Stator (42), der drehfest bezüglich des Motorträgers (26) ist, und ein Blechpaket (40), das drehfest an der Motorwelle (32) befestigt ist.

8. Pumpenantrieb (14) für ein Kraftfahrzeug (2), insbesondere für eine Ölpumpe (8), mit einem Elektromotor (16) nach einem der Ansprüche 1 bis 7, und mit einem Getriebe (52), das ein Zahnrad (54) aufweist, das an der Motorwelle (32) drehfest befestigt ist.

## Claims

1. Electric motor (16) for a pump drive (14) of a motor vehicle (2), in particular of an oil pump (8), with a rotor (34) which comprises a motor shaft (32) which is mounted rotatably about a rotational axis (22) and is coupled to a motor subframe (26) by means of a freewheel (36), the freewheel (36) being held on the motor subframe (26) by means of a securing device (39), **characterized in that** the freewheel (36) has an outer sleeve (74) and a collar (78) which is integrally formed on the latter and projects radially outwards, and **in that** the collar (78) has a tangential stop (80) which bears against a corresponding pin (72) of the motor subframe (26).

2. Electric motor (16) according to Claim 1, **characterized in that** the pin (72) is deformed on the free end side.

3. Electric motor (16) according to Claim 1 or 2, **characterized in that** the tangential stop (80) bears against the pin (72) in a positively locking manner.

4. Electric motor (16) according to one of Claims 1 to 3, **characterized in that** the pin (72) has a round cross section, and **in that** the tangential stop (80) is formed by means of a notch.

5. Electric motor (16) according to one of Claims 1 to 3, **characterized in that** the pin (72) is of rectilinear configuration on the side which faces the collar (78), and **in that** the tangential stop (80) is formed by means of a flattened portion.

6. Electric motor (16) according to one of Claims 1 to 5, **characterized by** a further tangential stop (80) and/or a corresponding further pin (72) which are offset by 180° with regard to the rotational axis (22) with respect to the tangential stop (80) and pin (72), respectively.

7. Electric motor (16) according to one of Claims 1 to 6, **characterized by** a stator (42) which is fixed so as not to rotate with regard to the motor subframe (26), and a laminated core (40) which is fastened fixedly to the motor shaft (32) for conjoint rotation.

8. Pump drive (14) for a motor vehicle (2), in particular for an oil pump (8), with an electric motor (16) according to one of Claims 1 to 7, and with a gear mechanism (52) which has a gearwheel (54) which is fastened fixedly to the motor shaft (32) for conjoint rotation.

## Revendications

1. Moteur électrique (16) pour un entraînement de pompe (14) d'un véhicule automobile (2), notamment d'une pompe à huile (8), avec un rotor (34) qui comprend un arbre de moteur (32) monté de manière rotative autour d'un axe de rotation (22), qui est couplé à un support de moteur (26) au moyen d'une roue libre (36), la roue libre (36) étant maintenue sur le support de moteur (26) au moyen d'un appareil de sécurisation (39),
**caractérisé en ce que**
la roue libre (36) présente un manchon extérieur (74) et une collerette (78) formée sur celui-ci, faisant saillie radialement vers l'extérieur, et **en ce que** la collerette (78) présente une butée tangentielle (80) qui s'applique sur un tourillon correspondant (72) du support de moteur (26) .

2. Moteur électrique (16) selon la revendication 1,
**caractérisé en ce que**
le tourillon (72) est déformé du côté de l'extrémité libre.

3. Moteur électrique (16) selon la revendication 1 ou 2,
**caractérisé en ce que**
la butée tangentielle (80) s'applique par complémentarité de forme contre le tourillon (72).

4. Moteur électrique (16) selon l'une quelconque des revendications 1 à 3,
**caractérisé en ce que**
le tourillon (72) présente une section transversale ronde, et **en ce que** la butée tangentielle (80) est formée au moyen d'une encoche.

5. Moteur électrique (16) selon l'une quelconque des revendications 1 à 3,
**caractérisé en ce que**
le tourillon (72) est conçu sous forme rectiligne sur le côté tourné vers la collerette (78), et **en ce que** la butée tangentielle (80) est formée au moyen d'un méplat.

6. Moteur électrique (16) selon l'une quelconque des revendications 1 à 5,
**caractérisé par**
une autre butée tangentielle (80) et/ou un autre tourillon correspondant (72), qui sont décalés de 180° par rapport à l'axe de rotation (22) par rapport à la butée tangentielle (80) ou au tourillon (72).

7. Moteur électrique (16) selon l'une quelconque des revendications 1 à 6,
**caractérisé par**
un stator (42) solidaire en rotation par rapport au support de moteur (26), et un paquet de tôles (40) fixé de manière solidaire en rotation à l'arbre de moteur (32) .

8. Entraînement de pompe (14) pour un véhicule automobile (2), notamment pour une pompe à huile (8), avec un moteur électrique (16) selon l'une quelconque des revendications 1 à 7, et avec un engrenage (52) qui présente une roue dentée (54) qui est fixée de manière solidaire en rotation à l'arbre de moteur (32).
